# EUROPÄISCHE PATENTSCHRIFT

(11) **EP 3 927 563 B1**
(45) Veröffentlichungstag und Bekanntmachung des Hinweises auf die Patenterteilung: **14.12.2022**
(21) Anmeldenummer: 20717549.8
(22) Anmeldetag: 15.02.2020
(51) Int. Cl.: B60G 3/14, B60D 1/46, B62D 33/02, B60G 17/017

(54) **VORRICHTUNG ZUM ABSENKEN UND ANHEBEN DES RÜCKSEITIGEN TEILES DES RAHMENS EINES FAHRZEUGES**
DEVICE FOR LOWERING AND RAISING THE REAR-SIDE PART OF THE CHASSIS OF A VEHICLE
DISPOSITIF POUR ABAISSER ET RELEVER LA PARTIE ARRIÈRE DU CHÂSSIS D'UN VÉHICULE

(30) Priorität: 19.02.2019 DE 202019000777 U
(43) Veröffentlichungstag der Anmeldung: 29.12.2021
(73) Patentinhaber: Eder GmbH, 83104 Tuntenhausen (DE)
(72) Erfinder: EDER, Peter, 83104 Tuntenhausen (DE); HEILMEIER, Günter, 83229 Aschau (DE)
(86) Internationale Anmeldenummer: PCT/DE2020/000029
(87) Internationale Veröffentlichungsnummer: WO 2020/169137

(56) Entgegenhaltungen:
- EP-A1- 1 122 151
- EP-A1- 3 348 421
- WO-A1-94/11210
- DE-U1-202013 011 633
- DE-U1-202017 001 605
- JP-A- S57 157 000
- JP-U- S56 114 904

## Beschreibung

Die vorliegende Erfindung betrifft eine Vorrichtung zum Absenken und Anheben des in Fahrtrichtung rückseitigen, nach hinten weisenden Teiles des Rahmens eines Transportfahrzeuges, einer Anhängervorrichtung, eines Kastenwagens, eines Kofferfahrzeuges oder eines Verkaufsfahrzeuges sowie zur Veränderung des zwischen der Längsachse des Rahmens einerseits und dem Untergrund andererseits eingeschlossenen Neigungswinkels α, mit den in dem Patentanspruch 1 angegebenen Merkmalen. Eine Vorrichtung nach dem Oberbegriff des Anspruchs 1 ist aus dem Dokument JP S56 114904 U bekannt.

Aus dem Stand der Technik sind Kraftfahrzeuge bekannt, bei welchen eine Absenkung des Rahmens in vertikaler Richtung bis auf Höhe des Radkastens möglich ist.

Diese bekannten Kraftfahrzeuge mit absenkbarem Rahmen sind insbesondere deswegen nachteilig, weil bei ihnen eine Absenkung des Rahmens lediglich bis auf die Höhe des Radkastens möglich ist.

Bei einer vertikal weiter nach unten verlaufenden Absenkung des Rahmens würde dort eine schädigende oder zerstörende Kollision zwischen Radkasten und Rad drohen.

Die dortige, sehr wegebegrenzte Absenkbarkeit des Rahmens lediglich bis auf die Höhe des Radkastens ist auch deswegen nachteilig, weil dadurch der Auffahrwinkel auf die auf dem Rahmen vorgesehene Ladefläche sehr steil wird.

Diese Steilheit des Auffahrwinkels führt beispielsweise zu den Nachteilen, dass der Kraftaufwand beim Hinaufschieben rollbarer Gegenstände auf die steil ansteigende Ladefläche sehr ausgeprägt ist, dass Einrichtungen innerhalb des geneigten Fahrzeuges eine besonders stark ausgeprägte Neigung entgegengesetzt zur Fahrtrichtung erfahren und dass rollbare Gegenstände möglicherweise unbeabsichtigt von der geneigten Ladefläche wieder herunterrollen.

Ein weiterer Nachteil der auf die Höhe der Oberkante des Radkastens wegbeschränkten Absenkbarkeit des Rahmens besteht darin, dass dort ein großer vertikaler Höhenunterschied zwischen der rückseitigen Ladekante der Ladefläche und dem Untergrund mittels einer besonders langen, sperrigen und kostenintensiven Auffahrrampe überwunden werden muss.

### Bestätigungskopie

Die dort zwingende Verwendung einer besonders langen, teuren und sperrigen Auffahrrampe führt dazu, dass im Falle der bekannten Fahrzeuge eine besonders ausgeprägte - oftmals nicht erfüllbare - Raumforderung rückseitig von dem zu Ladezwecken geparkten Fahrzeug zu berücksichtigen ist.

Aufgabe der vorliegenden Erfindung ist daher die Bereitstellung einer Vorrichtung zum Absenken und Anheben des rückseitigen Teiles des Rahmens eines Transportfahrzeuges, einer Anhängervorrichtung, eines Kastenwagens, eines Kofferfahrzeuges oder eines Verkaufsfahrzeuges sowie zur Veränderung des zwischen der Längsachse des Rahmens einerseits und dem Untergrund andererseits eingeschlossenen Neigungswinkels α, welche eine vertikale Absenkung des Rahmens - in dem Bereich der Hinterachse - bis auf eine Höhe gestattet, die unterhalb der Oberkante des Radkastens liegt, welche einen besonders flachen Auffahrwinkel auf die auf dem Rahmen vorgesehene Ladefläche ermöglicht, weshalb der Kraftaufwand beim Hinaufschieben von rollbaren Gegenständen auf die Ladefläche besonders gering ist, bei welcher Einrichtungen innerhalb des Fahrzeuges oder Anhängers eine nur sehr geringe Neigung - entgegengesetzt zur Fahrtrichtung - nach hinten erfahren und bei welcher rollbare Gegenstände nicht mehr unbeabsichtigt von der nur in geringem Ausmaße geneigten Ladefläche von selbst nach hinten herunterrollen, welche nur einen sehr geringen vertikalen Höhenunterschied zwischen dem rückseitigen Ende des Rahmens oder der rückseitigen Ladekante einerseits und dem Untergrund andererseits aufweist, welcher - wenn überhaupt - lediglich mittels einer sehr kurzen Auffahrrampe - ohne ausgeprägte Raumforderung hinter dem Fahrzeug oder Anhänger - zu überwinden ist.

Erfindungsgemäß wird diese Aufgabe bei einer gattungsgemäßen Vorrichtung durch die in dem Patentanspruch 1 angegebenen Merkmale gelöst. Besonders bevorzugte Ausführungsformen sind Gegenstand der Unteransprüche.

Ausführungsbeispiele der Erfindung werden anhand der Zeichnungen näher beschrieben. Es zeigen:

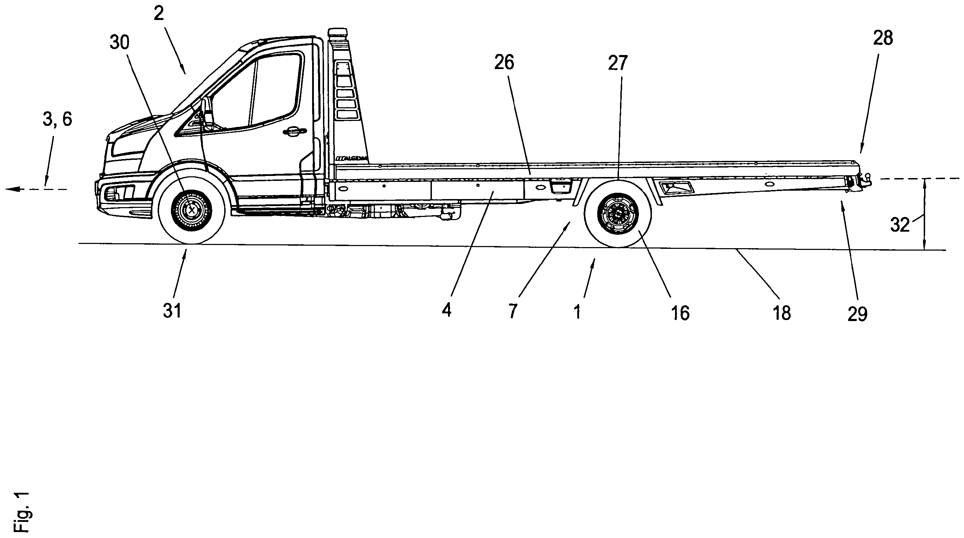

Figur 1 eine Seitenansicht eines Transportfahrzeuges (2) mit einer erfindungsgemäßen Einrichtung (7), welche eine teleskopierbare Hinterachse (1) umfasst, in Fahrstellung, mit im wesentlichen horizontal ausgerichtetem Rahmen (4), wobei die Drehachse (30) des Rahmens (4) - wie hier dargestellt - bei rotierbaren Vorderrädern (33; kein eingelegter Gang und keine auf die Vorderräder (33) wirkende Bremse) durch die mittigen Naben der Vorderräder (33) verläuft, wobei die Drehachse (30) des Rahmens (4) bei nicht-rotierbaren Vorderrädern (33; eingelegter Gang und/oder auf die Vorderräder (33) wirkende Bremse) durch die in horizontaler Hinsicht tieferliegenden Radauflagebereiche der Vorderräder (33) verlaufen würde;

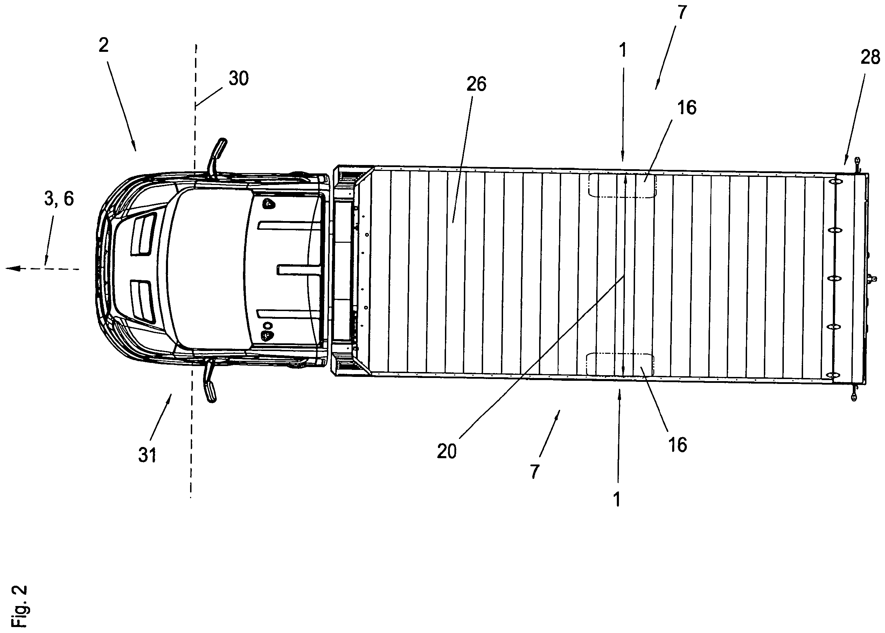

Figur 2 eine Draufsicht auf ein in Figur 1 dargestelltes Transportfahrzeug (2) mit einer eine erfindungsgemäße, teleskopierbare Hinterachse (1) umfassenden Einrichtung (7), in Fahrstellung, mit im wesentlichen horizontal ausgerichtetem Rahmen (4), wobei der Abstand (20) zwischen den beiden gegenüberliegenden Hinterrädern (16) der teleskopierbaren Hinterachse (1) der normalen, engen Spurbreite des Transportfahrzeuges (2) entspricht;

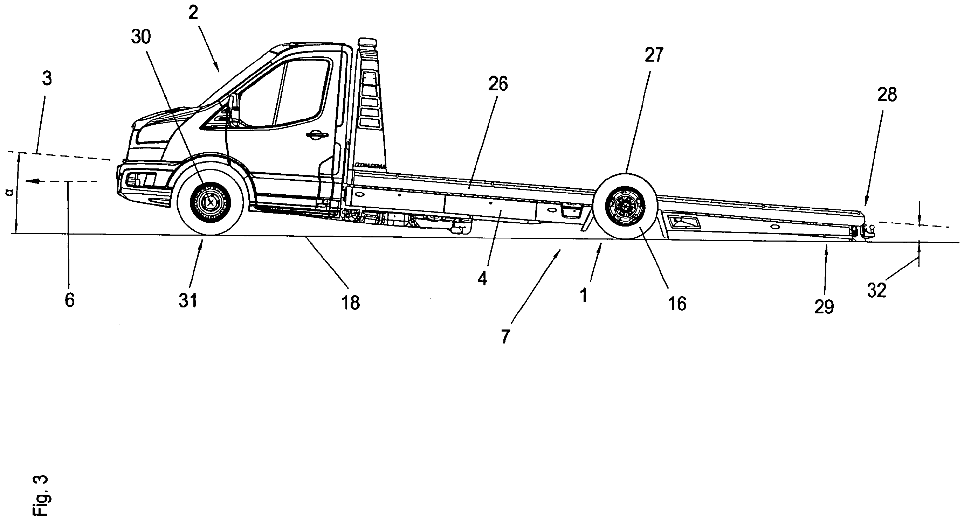

Figur 3 eine Seitenansicht eines Transportfahrzeuges (2) mit einer erfindungsgemäßen Einrichtung (7), welche eine teleskopierbare Hinterachse (1) umfasst, wobei die auf dem Rahmen (4) vorgesehene Ladefläche (26) nach hinten, entgegengesetzt zur Fahrtrichtung, schräg abgesenkt ist, so dass der Rahmen (4) - im Bereich der teleskopierbaren Hinterachse (1) - bis auf eine Höhe abgesenkt ist, welche unterhalb der Oberkanten (27) der Räder (16) der Hinterachse (1) liegt und wobei das freie, entgegen der Fahrtrichtung (6) nach hinten weisende Ende (28) der Ladefläche (26) mittelbar oder unmittelbar mit dem Untergrund (18) in Kontakt kommt, wobei die Drehachse (30) des Rahmens (4) - wie hier dargestellt - bei rotierbaren Vorderrädern (33; kein eingelegter Gang und keine auf die Vorderräder (33) wirkende Bremse) durch die mittigen Naben der Vorderräder (33) verläuft, wobei die Drehachse (30) des Rahmens (4) bei nicht-rotierbaren Vorderrädern (33; eingelegter Gang und/oder auf die Vorderräder (33) wirkende Bremse) durch die in horizontaler Hinsicht tieferliegenden Radauflagebereiche der Vorderräder (33) verlaufen würde;

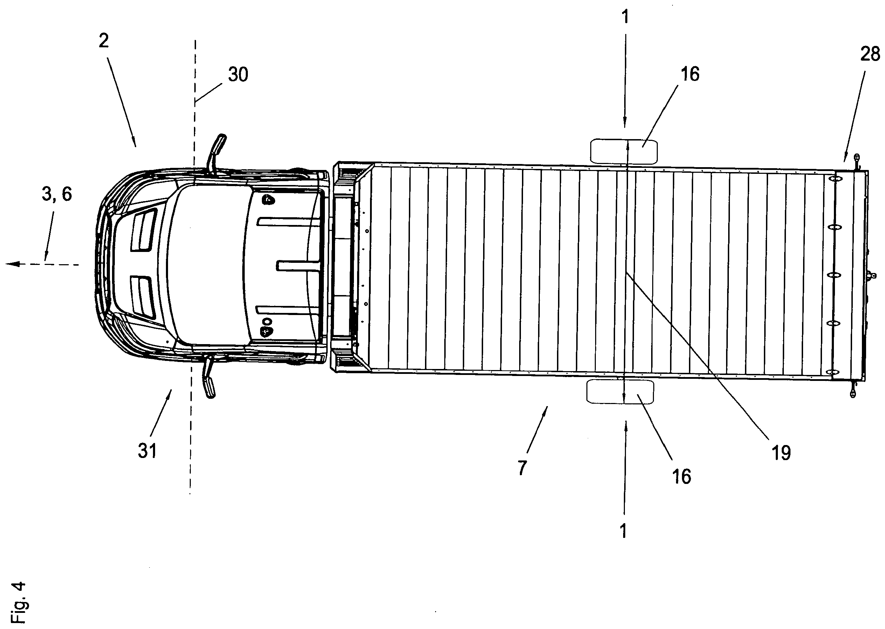

Figur 4 eine Draufsicht auf ein in Figur 3 dargestelltes Transportfahrzeug (2) mit einer erfindungsgemäßen, teleskopierbaren Hinterachse (1), dessen auf dem Rahmen (4) vorgesehene Ladefläche (26) nach hinten, entgegengesetzt zur Fahrtrichtung (6), schräg abgesenkt ist, so dass der Rahmen (4) - im Bereich der teleskopierbaren Hinterachse (1) - bis auf eine Höhe abgesenkt ist, welche unterhalb der Oberkanten (27) der Räder (16) der Hinterachse (1) liegt und wobei das freie, entgegen der Fahrtrichtung (6) nach hinten weisende Ende (28) der Ladefläche (26) mittelbar oder unmittelbar mit dem Untergrund (18) in Kontakt kommt, wobei der Abstand (19) zwischen den beiden gegenüberliegenden Hinterrädern (16) der teleskopierbaren Hinterachse (1) der teleskopierten, verbreiterten Spurbreite der teleskopierbaren Hinterachse (1) entspricht;

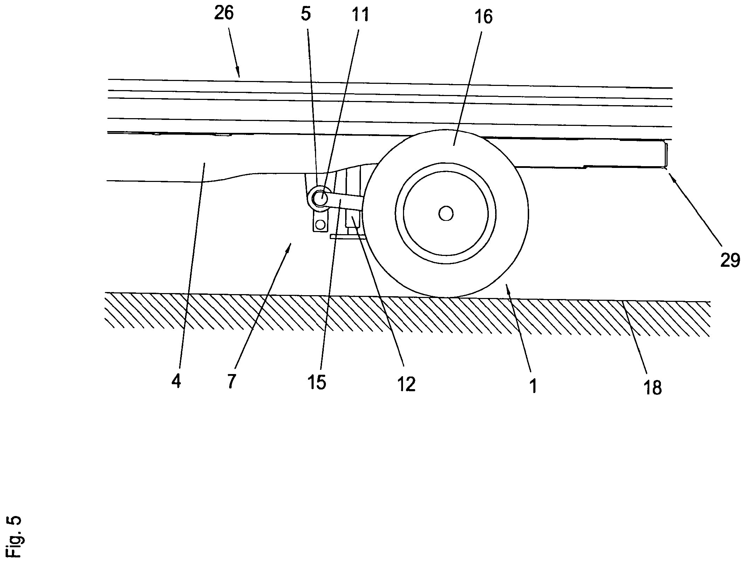

Figur 5 eine schematische Seitenansicht einer erfindungsgemäßen Einrichtung (7) zum Absenken und Anheben des Rahmens (4) während des Teleskopierens der Hinterachse (1), wobei der Rahmen (4) im wesentlichen noch horizontal ausgerichtet ist und sich folglich in nicht abgesenkter Transportstellung befindet und wobei die Hub- und Senkeinrichtung (12) für den Rahmen (4) noch vollständig nach oben eingefahren ist;

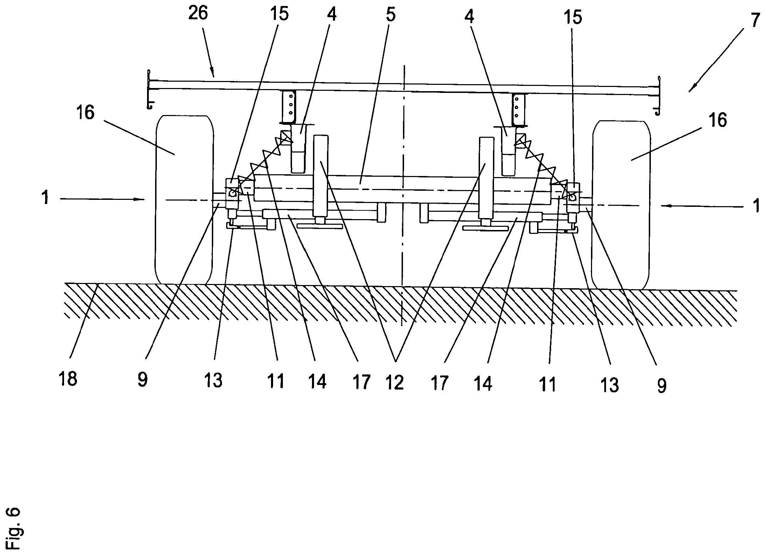

Figur 6 eine schematische Rückansicht einer erfindungsgemäßen Einrichtung (7) zum Absenken und Anheben des Rahmens (4) während des Teleskopierens der Hinterachse (1), wobei der Rahmen (4) im wesentlichen noch horizontal ausgerichtet ist und sich folglich in nicht abgesenkter Transportstellung befindet und wobei die Teleskoprohre (11) beidseitig in das zentrale Führungsrohr (5) eingefahren sind und jeweils mittels einer Sicherungs- und Verriegelungseinrichtung (13) in dieser eingefahrenen Stellung festgehalten werden und wobei die Hub- und Senkeinrichtungen (12) für den Rahmen (4) noch vollständig eingefahren sind und wobei die Federelemente (14) in einer im wesentlichen vertikalen, etwas schräg nach außen weisenden Ausrichtung positioniert sind;

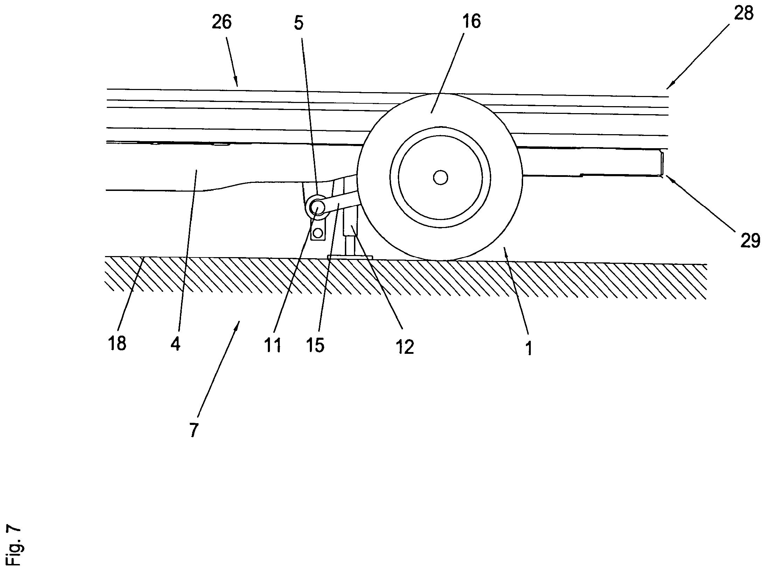

Figur 7 eine schematische Seitenansicht einer erfindungsgemäßen Einrichtung (7) zum Absenken und Anheben des Rahmens (4) während des Teleskopierens der Hinterachse (1), wobei der Rahmen (4) zumindest etwas entgegengesetzt zur Fahrtrichtung (6) abgesenkt ist und die Hub- und Senkeinrichtung (12) zur Abstützung des Rahmens (4) auf den Untergrund (18) nach unten ausgefahren ist;

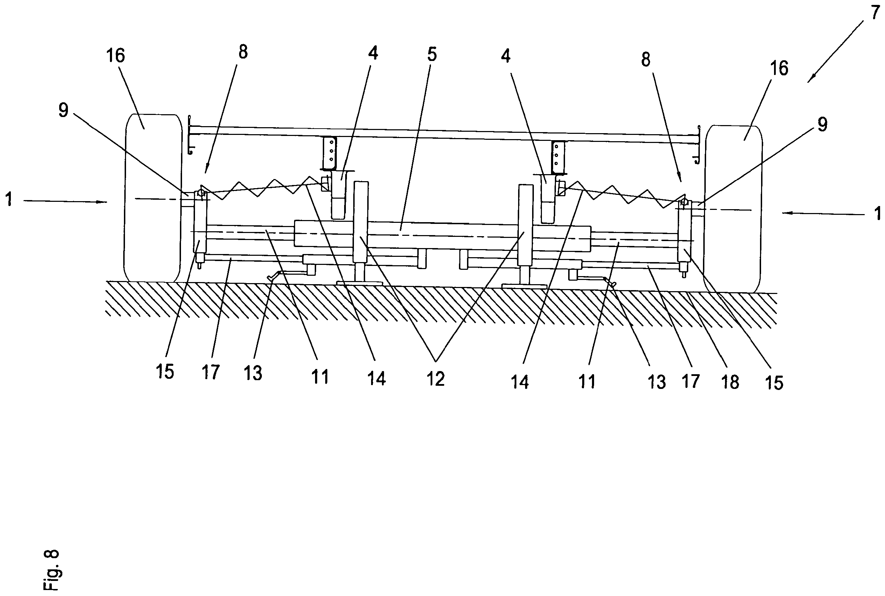

Figur 8 eine schematische Rückansicht einer erfindungsgemäßen Einrichtung (7) zum Absenken und Anheben des Rahmens (4) während des Teleskopierens der Hinterachse (1), wobei der Rahmen (4) bereits nach hinten entgegengesetzt zur Fahrtrichtung (6) abgesenkt ist und sich folglich in abgesenkter Belade- oder Entladestellung befindet und wobei die Teleskoprohre (11) - nach Öffnung der beiden Sicherungs- und Verriegelungseinrichtungen (13) - beidseitig aus dem zentralen Führungsrohr (5) ausgefahren sind und wobei die Hub- und Senkeinrichtungen (12) für den Rahmen (4) vollständig eingefahren sind und wobei die Federelemente (14) in einer schrägen, nach außen geneigten und im wesentlichen der Horizontalen angenäherten Ausrichtung positioniert sind und wobei die Teleskopiereinrichtungen (17) für das Teleskopieren der teleskopierbaren Hinterachse (1) das jeweilige Teleskoprohr (11) aus dem zentralen Führungsrohr (5) ausschieben;

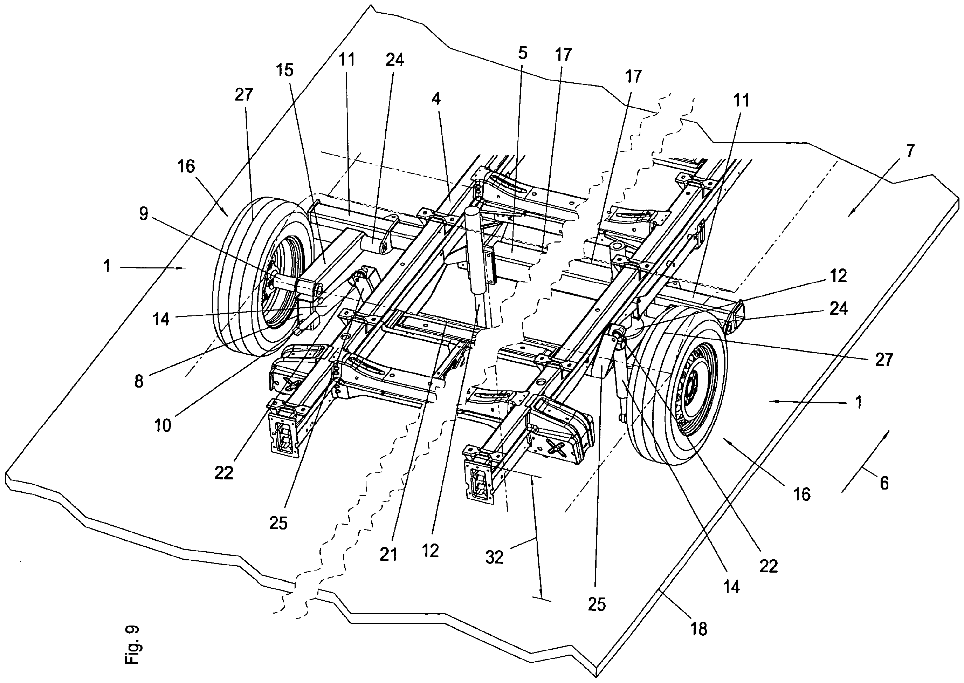

Figur 9 eine schematische Draufsicht auf eine erfindungsgemäße Einrichtung (7) von - in Bezug auf die Fahrtrichtung (6) - schräg hinten oben, bei welcher - zu grafischen Vereinfachungs- und zu Vergleichszwecken in Gegenüberstellung - die in Fahrtrichtung (6) auf der rechten Seite befindliche teleskopierbare Hinterachse (1) - bei in etwa vertikal ausgerichtetem Federelement (14) - auf eine schmale Spurbreite eng eingefahren - und nicht nach außen teleskopiert - ist und die in Fahrtrichtung (6) auf der rechten Seite befindliche Hub- und Senkeinrichtung (12) für den Rahmen (4) noch nach oben eingefahren ist, während die in Fahrtrichtung (6) auf der linken Seite befindliche teleskopierbare Hinterachse (1) - bei schräg ausgerichtetem Federelement (14) - auf eine weite Spurbreite ausgefahren ist und die in Fahrtrichtung (6) links liegende Hub- und Senkeinrichtung (12) für den Rahmen (4) ausgefahren ist;

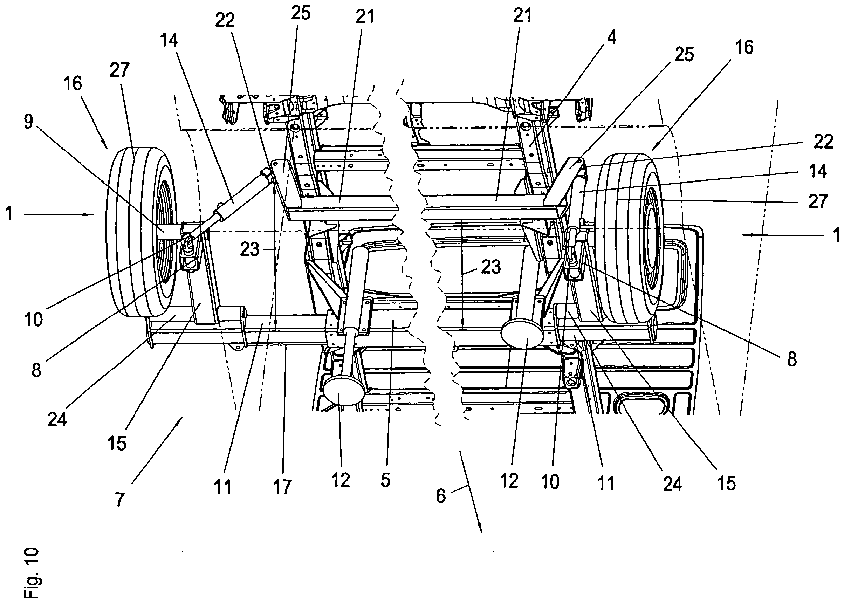

Figur 10 eine schematische Ansicht von unten und von in Fahrtrichtung (6) hinten auf die in Figur 9 dargestellte erfindungsgemäße Einrichtung (7), bei welcher - zu grafischen Vereinfachungs- und zu Vergleichszwecken in Gegenüberstellung - die in Fahrtrichtung (6) auf der rechten Seite befindliche teleskopierbare Hinterachse (1) - bei in etwa vertikal ausgerichtetem Federelement (14) - auf eine schmale Spurbreite eng eingefahren - und nicht nach außen teleskopiert - ist und die in Fahrtrichtung (6) auf der rechten Seite befindliche Hub- und Senkeinrichtung (12) für den Rahmen (4) nach oben eingefahren ist, während die in Fahrtrichtung (6) auf der linken Seite befindliche teleskopierbare Hinterachse (1) - bei schräg ausgerichtetem Federelement (14) - auf eine weite Spurbreite ausgefahren ist und die in Fahrtrichtung (6) links liegende Hub- und Senkeinrichtung (12) für den Rahmen (4) ausgefahren ist;

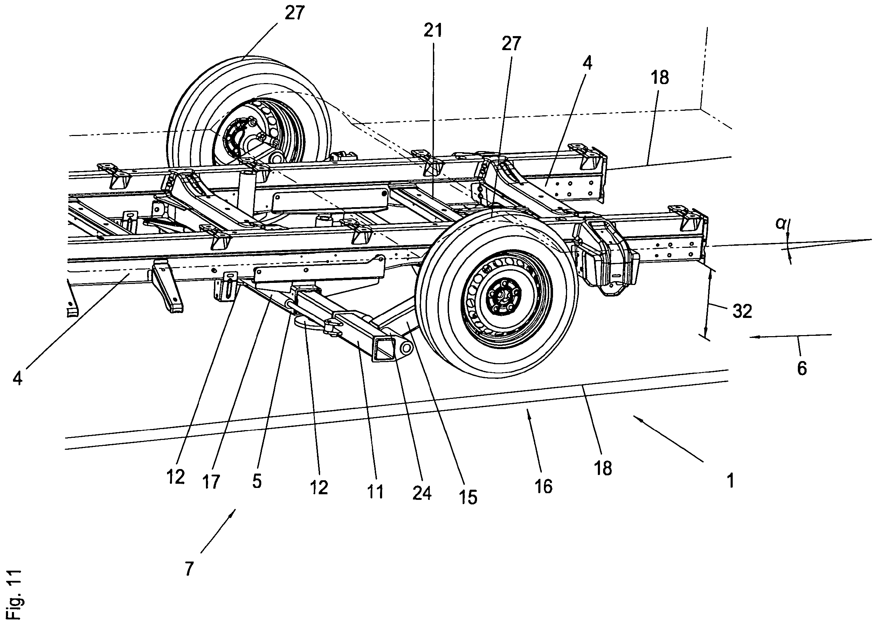

Figur 11 eine schematische Seitenansicht einer erfindungsgemäßen Einrichtung (7) von - in Bezug auf die Fahrtrichtung (6) - schräg links vorne und zumindest etwas von oben, bei welcher beide teleskopierbaren Hinterachsen (1) - bei schräg ausgerichteten Federelementen (14) - auf eine weite Spurbreite (19) ausgefahren und die beiden Hub- und Senkeinrichtungen (12) für den Rahmen (4) in vertikaler Richtung nach oben vollständig eingefahren sind, so dass der Rahmen (4) gegenüber dem freien Ende der Achsschwinge (15) in seine in vertikaler Hinsicht tiefste Position abgesenkt ist;

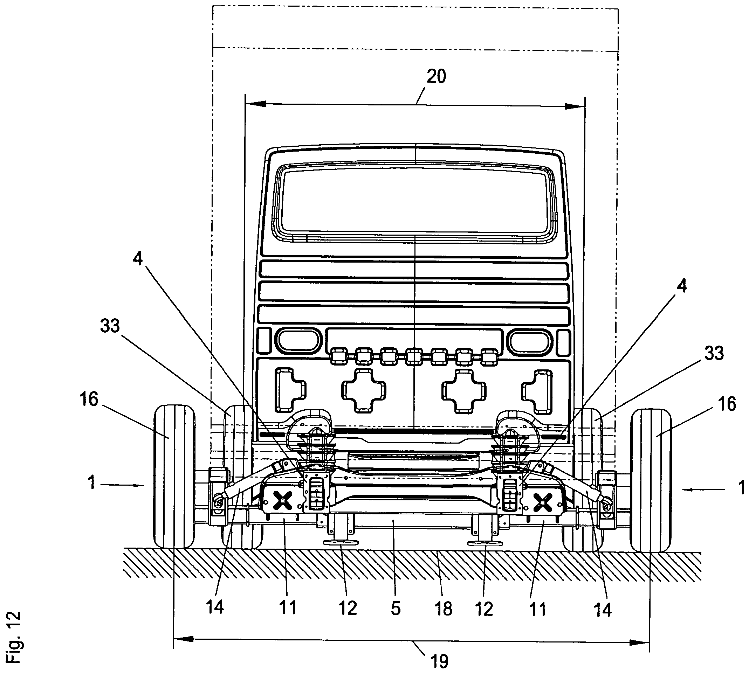

Figur 12 eine schematische Ansicht von hinten auf die in Figur 11 dargestellte erfindungsgemäße Einrichtung (7), bei welcher die teleskopierbare Hinterachse (1) auf eine weite Spurbreite (19) auseinanderteleskopiert ist und die beiden gegenüberliegenden Räder (33) der Vorderachse (31) entsprechend der normalen Spurbreite (20) des Fahrzeuges (2) eng und schmal voneinander beabstandet sind.

Die vorliegende Erfindung betrifft also zum Einen eine Vorrichtung (7) zum Absenken und Anheben des in Fahrtrichtung (6) rückseitigen, nach hinten weisenden Teiles (29) des Rahmens (4) eines Transportfahrzeuges (2), einer Anhängervorrichtung, eines Kastenwagens, eines Kofferfahrzeuges oder eines Verkaufsfahrzeuges.

Die erfindungsgemäße Vorrichtung (7) erlaubt darüber hinaus zusätzlich die Einstellung des zwischen der Längsachse (3) des Rahmens (4) - oder ihrer rückseitigen Verlängerung - einerseits und dem Untergrund (18) andererseits eingeschlossenen Neigungswinkels a.

Die erfindungsgemäße Vorrichtung (7) umfasst mindestens eine in Bezug auf ihre Spurbreite (19, 20) mittelbar oder unmittelbar teleskopierbare Hinterachse (1) und eine oder mehrere Hub- und Senkeinrichtungen (12) zum unmittelbaren oder mittelbaren Abstützen, Anheben oder Absenken des rückseitigen, in Fahrtrichtung (6) nach hinten weisenden Teiles (29) des Rahmens (4).

In besonders bevorzugten Ausführungsformen der erfindungsgemäßen Vorrichtung (7) kann diese eine oder mehrere, jeweils ein- oder mehrteilige, Steuerungseinrichtungen umfassen.

In der Regel können diese Steuerungseinrichtungen derart ausgebildet sein, dass sie automatisch oder manuell sowie abhängig oder unabhängig voneinander, nach dem vollständigen oder teilweisen Ausfahren der Hub- und Senkeinrichtungen (12) nach unten, die Abstände (19, 20) zwischen den dann lastenfreien oder lastenarmen Rädern (16) der teleskopierbaren Hinterachse (1), während des Stillstandes des Transportfahrzeuges (2) oder der Anhängervorrichtung, mittels einer oder mehrerer Teleskopiereinrichtungen (17) variabel einstellen.

Im Allgemeinen können die beidseitigen Achsstummel (9) - in nicht-teleskopiertem Zustand (20) der teleskopierbaren Hinterachse (1) - gegenüber der Höhe einer von dem Rahmen (4) aufgespannten Fläche in vertikaler Hinsicht tieferliegend sein.

In teleskopiertem Zustand (19) der teleskopierbaren Hinterachse (1) können die Achsstummel (9) im Vergleich hierzu höherliegend sein.

Wie insbesondere Figur 3 zeigt, kann - bei einer Seitenbetrachtung - der zwischen einer rückseitigen Verlängerung der Längsachse (3) des Rahmens (4) einerseits und dem Untergrund (18) andererseits eingeschlossene Neigungswinkel α - nach dem vollständigen Einfahren oder Verkürzen der Hub- und Senkeinrichtung (12) für den Rahmen (4) - in dem Bereich von 2,0° bis 15,0°, vorzugsweise in dem Bereich von 3,0° bis 12,0°, insbesondere in dem Bereich von 4,0° bis 10,0°, liegen.

Der insbesondere in den Figuren 1 und 3 dargestellte Abstand (32) zwischen dem rückseitigen Ende des Rahmens (4) oder der Ladekante (28) einerseits und dem Untergrund (18) andererseits kann in einem Bereich einstellbar sein, welcher zwischen 300,0 mm bis 0,0 cm, vorzugsweise zwischen 280,0 mm bis 0,0 cm, insbesondere in dem Bereich zwischen 250,0 mm bis 0,0 cm, liegt.

Insbesondere die Figuren 5 bis 12 zeigen, dass die teleskopierbare Hinterachse (1) mindestens ein mit dem Rahmen (4) mittelbar oder unmittelbar in Verbindung stehendes, zentrales Führungsrohr (5) umfassen.

Aus den beidseitigen freien Enden dieses zentralen Führungsrohres (5) ist jeweils ein Teleskoprohr (11) mittelbar oder unmittelbar nach außen gerichtet ein- und ausfahrbar. Jedes nach außen weisende, freie Ende der beiden ein- und ausfahrbaren Teleskoprohre (11) trägt jeweils eine Achsschwinge (15) mittelbar oder unmittelbar.

An den entgegengesetzt zur Fahrtrichtung (6) ausgerichteten, freien Enden jeder Achsschwinge (15) ist jeweils ein Rad (16) unmittelbar oder mittelbar über einen zwischengeschalteten Achsstummel (9) angebracht.

Insbesondere die Figuren 9, 10 und 11 zeigen, dass die Anbringung der jeweiligen Achsschwinge (15) an ihrem Teleskoprohr (11) mittels einer Schwenkeinrichtung (24) erfolgen kann, welche eine Schwenkbewegung der Achsschwinge (15) um die Achse des Teleskoprohres (11) gestattet.

Aus den Figuren 6, 8, 9, 10 und 11 geht hervor, dass die Ein- und Ausfahrbarkeit der beiden nach außen gerichteten Teleskoprohre (11) aus dem zentralen Führungsrohr (5) durch jeweils eine Teleskopiereinrichtung (17) bewirkbar sein kann, welche zwischen dem zentralen Führungsrohr (5) und dem jeweiligen Teleskoprohr (11) in translatorischer Hinsicht parallel zur Längsachse des Führungsrohres (5) verkürzend und verlängernd wirkt.

Im Allgemeinen können die Teleskopiereinrichtungen (17) in Form von elektrisch, pneumatisch, hydraulisch oder mechanisch - oder in Mischformen hiervon - betriebenen Hubzylindern ausgebildet sein.

Wie bereits ausgeführt, kann der Rahmen (4) des Transportfahrzeuges (2), einer Anhängervorrichtung, eines Kastenwagens, eines Kofferfahrzeuges oder eines Verkaufsfahrzeuges mit mindestens einer Hub- und Senkeinrichtung (12) mittelbar oder unmittelbar in Verbindung stehen.

In der Regel kann nur bei Stillstand des Fahrzeuges und nur in angehobenem, nach unten ausgefahrenem Zustand der Hub- und Senkeinrichtung (12), ein lastenarmes oder lastenfreies Ein- und Ausfahren der Teleskoprohre (11) aus dem zentralen Führungsrohr (5) - ohne oder mit reduzierten Reibungswiderständen zwischen Untergrund (18) und den beiden Rädern (16) - herbeiführbar sein.

Vorzugsweise können - nach dem seitlichen Ausfahren der Teleskoprohre (11) aus dem zentralen Führungsrohr (5) - die Hub- und Senkeinrichtungen (12) wieder vollständig nach oben einziehbar sein.

Der rückseitige, in Fahrtrichtung (6) nach hinten weisende Teil (29) des Rahmens (4) - und/oder die rückseitige Ladekante (28) der Ladefläche (26) - können dann vollständig auf den Untergrund (18) vertikal absenkbar sein.

In der Regel erfolgt dabei eine Schwenkbewegung des Rahmens (4) um eine - in der Draufsicht - rechtwinklig zur Längsachse (3) des Fahrzeuges (2) ausgerichtete Drehachse (30), welche durch die Vorderachse (31) oder durch die Mitte der Vorderachse (31) oder durch den Radaufstandspunkt der Vorderräder (33) verläuft.

Wie in den Figuren 1 und 3 dargestellt, kann bei nicht eingelegtem Gang und gelöster Bremse, also bei rotierbaren Vorderrädern (33), die Drehachse (30) durch die Mitte der Vorderräder (33) verlaufen.

Bei eingelegtem Gang oder auf die Vorderräder (33) wirkender Bremse sind die Vorderräder (33) hingegen arretiert und nicht-rotierbar. Die Drehachse (30) des Rahmens (4) verläuft dann in vertikaler Hinsicht auf dem Niveau der Radaufstandspunkte der Vorderräder (33);
Insbesondere die Figuren 6 und 8 zeigen, dass jedes Teleskoprohr (11) jeweils mittels einer Sicherungseinrichtung (13) und/oder eines Verriegelungselementes in der in das zentrale Führungsrohr (5) eingefahrenen Stellung festhaltbar und dort fixierbar sein kann.

In der Regel können diese Sicherungseinrichtungen (13) oder Verriegelungselemente mechanisch, pneumatisch, hydraulisch, elektrisch - oder in Mischformen hiervon - betreibbar sein.

Aus den Figuren 8, 9 und 10 geht hervor, dass jedes freie Ende der beiden Achsschwingen (15) jeweils unmittelbar - oder mittelbar über eine starr an dem freien Ende der jeweiligen Achsschwinge (15) angebrachte Federelement-Anschluss-Einrichtung (8) - mit einem Federelement (14) in Verbindung stehen kann.

Diese Verbindung kann beispielsweise in Form eines einachsig oder zweiachsig schwenkbaren Gelenkes (10) ausgebildet sein.

Die Figuren 9 und 10 zeigen, dass das freie Ende jedes Federelementes (14) über ein einachsig oder zweiachsig schwenkbares Gelenk (22) mit dem Rahmen (4) - und/oder mit einer den Rahmen (4) entlastenden Lastaufnahmebrücke (21) - in Verbindung stehen kann.

Insbesondere Figur 10 ist zu entnehmen, dass das Gelenk (22) zwischen dem Federelement (14) und dem Rahmen (4) oder der Lastaufnahmebrücke (21) in einem Abstand (23) von dem Führungsrohr (5) der teleskopierbaren Hinterachse (1) angeordnet sein kann, welcher im wesentlichen der Länge der Achsschwinge (15) entspricht.

In diesem Fall kann das Federelement (14) - im nicht-teleskopierten Zustand (20) der teleskopierbaren Hinterachse (1) - nahezu senkrecht - bezogen auf die Längsachse des Rahmens (4) - ausgerichtet sein.

In den Figuren 8 (beidseitig), 9 [in Fahrtrichtung (6) links], 10 [in Fahrtrichtung (6) links] und 12, ist dargestellt, dass die Federelemente (14) bei aus dem zentralen Führungsrohr (5) ausgefahrenen Teleskoprohren (11) vorzugsweise schräg, in sehr ausgeprägtem Ausmaß nach außen gerichtet, ausgerichtet sein können.

Die Figuren 6, 9 [in Fahrtrichtung (6) rechts] und 10 [in Fahrtrichtung (6) rechts] zeigen, dass die Federelemente (14) bei in das zentrale Führungsrohr (5) eingefahrenen Teleskoprohren (11) in etwa vertikal, nur geringfügig nach außen gerichteter Ausrichtung, ausgerichtet sein können.

Insbesondere die Figuren 9 und 10 zeigen, dass eine Lastaufnahmebrücke (21) unterhalb des Rahmens (4) - oder zwischen den gegenüberliegenden Seiten des Rahmens (4) - verlaufen kann.

Vorzugsweise kann an jedem freien Ende der Lastaufnahmebrücke (21) jeweils ein Vorsprung (25) für die Anbringung eines Gelenkes (22) für das Federelement (14) vorgesehen sein.

Zusammenfassend ist festzustellen, dass im Rahmen der vorliegenden Erfindung eine Einrichtung (7) zum Absenken und Anheben des rückseitigen, in Fahrtrichtung (6) nach hinten weisenden Teiles (29) des Rahmens (4) eines Transportfahrzeuges (2), einer Anhängervorrichtung, eines Kastenwagens, eines Kofferfahrzeuges oder eines Verkaufsfahrzeuges sowie zur Veränderung des zwischen der Längsachse (3) des Rahmens (4) einerseits und dem Untergrund (18) andererseits eingeschlossenen Neigungswinkels α, bereitgestellt wird.

Ein besonderer Vorteil der erfindungsgemäßen Einrichtung (7) mit einer teleskopierbaren Hinterachse (1) besteht darin, dass nunmehr erstmals - bei ausgefahrener teleskopierter Hinterachse (1) - eine vertikale Absenkung des Rahmens (4) sogar bis auf eine Höhe möglich ist, die sich zwischen den beiden zueinander gegenüberliegenden Rädern (16) der teleskopierten, auf eine breite Spurbreite (19) eingestellten Hinterachse (1) und - in vertikaler Hinsicht - unterhalb der Oberkante (27) der Räder (16) befindet.

Bei technisch besonders störungssicher zu betreibenden und kostengünstig herzustellenden Ausführungsformen der erfindungsgemäßen Vorrichtung (7) können die Hinterräder (16) der teleskopierbaren Hinterachse (1) während des Teleskopier-Vorganges der Hinterachse (1) auf die breitere Spurbreite (19) - jedoch lediglich bei durch die Hub- und Senkeinrichtung (12) bewirkter lastenfreier oder lastenarmer Belastung - in Kontakt mit dem Untergrund (18) verbleiben.

In der Regel erfolgt eine Anhebung der Räder (16) der Hinterachse (1) von dem Untergrund (18) während des Teleskopier-Vorganges der Hinterachse (1) erst dann, wenn das Federelement (14) vollständig bis zu seinem Anschlag ausgefahren und dann gänzlich entspannt ist.

Wird - aus welchen Gründen auch immer - eine völlige Bodenfreiheit der Räder (16) der teleskopierbaren Hinterachse (1) während des Teleskopier-Vorganges der Hinterachse (1) gewünscht, kann beispielsweise eine Begrenzung der Federwege der Federelemente (14) mechanisch oder hydraulisch oder pneumatisch oder elektrisch herbeigeführt werden.

Während des Teleskopier-Vorganges bewirken dann die auf kurze Längen eingestellten oder am Ausfedern gehinderten Federelemente (14) eine automatische Anhebung der dann lastenfreien Räder (16) von dem Untergrund (18). Die Räder (16) der teleskopierbaren Hinterachse (1) können also während des Teleskopier-Vorganges der Hinterachse 1 völlig lastenfrei von dem Untergrund (18) frei beabstandet sein. Von besonderem Vorteil ist in dem Falle der erfindungsgemäßen Vorrichtung (7) jedoch, dass eine sichere Teleskopierbarkeit der Hinterachse (1) auch in dem Falle einer - zumindest lastenarmen - Belastung der mit dem Untergrund (18) in Kontakt stehenden Räder (16) gewährleistet ist

Von Vorteil ist bei der erfindungsgemäßen Einrichtung (7) auch insbesondere, dass sie die Realisierung eines besonders flachen Auffahrwinkels α auf die auf dem Rahmen (4) vorgesehene Ladefläche (26) ermöglicht (siehe insbesondere Figur 3). Der besonders flache Auffahrwinkel α führt vor allem bezüglich des Kraftaufwandes beim Hinaufschieben von rollbaren Gegenständen auf die Ladefläche (26) zu einer ausgeprägten Erleichterung.

Von Vorteil kann der flache Auffahrwinkel α auch deswegen sein, weil Einrichtungen innerhalb des Fahrzeuges oder Anhängers eine nur sehr geringe Neigung entgegengesetzt zur Fahrtrichtung (6) erfahren.

Ein weiterer günstiger Aspekt des flachen Auffahrwinkels α besteht darin, dass rollbare Gegenstände nicht mehr unbeabsichtigt von der nur noch in geringem Ausmaße geneigten Ladefläche (26) von selbst herunterrollen.

Da der Rahmen (4) und/oder die Ladefläche (26) im Falle der erfindungsgemäßen Einrichtung (7) gegenüber der Oberkante (27) des Radkastens beziehungsweise gegenüber den Rädern (16) besonders weit vertikal nach unten abgesenkt werden kann, tritt hier nur ein sehr geringer vertikaler Höhenunterschied [Abstand (32)] zwischen der rückseitigen Ladekante (28) der Ladefläche (26) und dem Untergrund (18) auf.

Dieser sehr geringe vertikaler Höhenunterschied [Abstand (32)] zwischen der rückseitigen Ladekante (28) der Ladefläche (26) und dem Untergrund (18) kann dort - wenn überhaupt erforderlich - bereits mittels einer sehr kurzen Auffahrrampe - ohne ausgeprägter Raumforderung hinter dem Transportfahrzeug - überwunden werden.

Von besonderem Vorteil ist im Falle der erfindungsgemäßen Einrichtung (7) ferner, dass die Hinterachse (1) bereits im Stillstand des Fahrzeuges (2) oder Anhängers teleskopierbar ist, indem bei stillstehendem Fahrzeug die beiden nach außen weisenden Teleskoprohre (11) aus dem zentralen Führungsrohr (5) problemlos, lastenfrei oder lastenarm ein- und ausfahrbar sind, wenn der Rahmen (4) vor dem Teleskopieren der Teleskoprohre (11) mittels der Hub- und Senkeinrichtungen (12) zunächst gegenüber dem Untergrund (18) abgestützt oder angehoben - oder sogar bis zum Abheben der Räder (16) von dem Untergrund (18) - emporgehoben wird.

Nach dem Teleskopieren der Hinterachse (1) werden die Hub- und Senkeinrichtungen (12) in der Regel wieder weitmöglichst verkürzt und eingefahren, so dass dann die beiden Räder (16) wieder mit dem Untergrund (18) in Kontakt kommen.

Ein zeitraubendes, mühsames und raumforderndes Hin- und Herrangieren des Fahrzeuges (2) oder Anhängers ist daher für den Vorgang des Teleskopierens der Hinterachse (1) erstmalig nicht mehr erforderlich.

Ein wesentlicher Vorteil der erfindungsgemäßen Einrichtung (7) besteht ferner darin, dass die Hinterachse (1) während des Teleskopiervorganges im Wesentlichen lastenfrei oder lediglich lastenarm belastet ist.

## Patentansprüche

1. Vorrichtung (7) zum Absenken und Anheben des in Fahrtrichtung (6) rückseitigen, nach hinten weisenden Teiles (29) des Rahmens (4) eines Transportfahrzeuges (2), einer Anhängervorrichtung, eines Kastenwagens, eines Kofferfahrzeuges oder eines Verkaufsfahrzeuges sowie zur Einstellung des zwischen der Längsachse (3) des Rahmens (4) - oder ihrer rückseitigen Verlängerung - einerseits und dem Untergrund (18) andererseits eingeschlossenen Neigungswinkels α, welche mindestens eine in Bezug auf ihre Spurbreite (19, 20) mittelbar oder unmittelbar teleskopierbare Hinterachse (1) und eine oder mehrere Hub- und Senkeinrichtungen (12) zum unmittelbaren oder mittelbaren Abstützen, Anheben oder Absenken des rückseitigen, in Fahrtrichtung (6) nach hinten weisenden Teiles (29) des Rahmens (4) umfasst, **dadurch gekennzeichnet, dass** die teleskopierbare Hinterachse (1) mindestens ein mit dem Rahmen (4) mittelbar oder unmittelbar in Verbindung bringbares, zentrales Führungsrohr (5) umfasst, wobei aus den beidseitigen freien Enden dieses zentralen Führungsrohres (5) jeweils ein Teleskoprohr (11) mittelbar oder unmittelbar nach außen gerichtet ein- und ausfahrbar ist, wobei jedes nach außen weisende, freie Ende der beiden ein- und ausfahrbaren Teleskoprohre (11) jeweils eine Achsschwinge (15) mittelbar oder unmittelbar trägt, wobei an den entgegengesetzt zur Fahrtrichtung (6) ausgerichteten, freien Enden jeder Achsschwinge (15) jeweils ein Rad (16) unmittelbar oder mittelbar über einen zwischengeschalteten Achsstummel (9) angebracht ist.

2. Vorrichtung (7) nach Anspruch 1, **dadurch gekennzeichnet, dass** sie eine oder mehrere, jeweils ein- oder mehrteilige, Steuerungseinrichtungen umfasst, welche derart ausgebildet sind, dass sie automatisch oder manuell sowie abhängig oder unabhängig voneinander, nach dem vollständigen oder teilweisen Ausfahren der Hub- und Senkeinrichtungen (12) nach unten, die Abstände (19, 20) zwischen den dann lastenfreien oder lastenarmen Rädern (16) der teleskopierbaren Hinterachse (1), während des Stillstandes des Transportfahrzeuges (2) oder der Anhängervorrichtung, mittels einer oder mehrerer Teleskopiereinrichtungen (17) variabel einstellen, wobei die beidseitigen Achsstummel (9) - in nicht-teleskopiertem Zustand (20) der teleskopierbaren Hinterachse (1) - gegenüber der Höhe einer von dem Rahmen (4) aufgespannten Fläche in vertikaler Hinsicht tieferliegend sind, während die Achsstummel (9) in teleskopiertem Zustand (19) der teleskopierbaren Hinterachse (1) im Vergleich hierzu höherliegend sind, so dass - bei einer Seitenbetrachtung - der zwischen einer rückseitigen Verlängerung der Längsachse (3) des Rahmens (4) einerseits und dem Untergrund (18) andererseits eingeschlossene Neigungswinkel α - nach dem vollständigen Einfahren oder Verkürzen der Hub- und Senkeinrichtung (12) für den Rahmen (4) - in dem Bereich von 2,0° bis 15,0° liegt, wobei der Abstand (32) zwischen dem rückseitigen Ende des Rahmens (4) oder der Ladekante (28) einerseits und dem Untergrund (18) andererseits in einem Bereich einstellbar ist, welcher zwischen 300,0 mm bis 0,0 cm liegt.

3. Vorrichtung (7) nach einem der Ansprüche 1 oder 2, **dadurch gekennzeichnet, dass** die Anbringung der jeweiligen Achsschwinge (15) an ihrem Teleskoprohr (11) mittels einer Schwenkeinrichtung (24) erfolgt, welche eine Schwenkbewegung der Achsschwinge (15) um die Achse des Teleskoprohres (11) gestattet.

4. Vorrichtung (7) nach einem der Ansprüche 1, 2 oder 3, **dadurch gekennzeichnet, dass** die Ein- und Ausfahrbarkeit der beiden nach außen gerichteten Teleskoprohre (11) aus dem zentralen Führungsrohr (5) durch jeweils eine Teleskopiereinrichtung (17) bewirkbar ist, welche zwischen dem zentralen Führungsrohr (5) und dem jeweiligen Teleskoprohr (11) in translatorischer Hinsicht parallel zur Längsachse des Führungsrohres (5) verkürzend und verlängernd wirkt.

5. Vorrichtung (7) nach Anspruch 4, **dadurch gekennzeichnet, dass** die Teleskopiereinrichtungen (17) in Form von elektrisch, pneumatisch, hydraulisch oder mechanisch - oder in Mischformen hiervon - betriebenen Hubzylindern ausgebildet sind.

6. Vorrichtung (7) nach einem der Ansprüche 1 bis 5, **dadurch gekennzeichnet, dass** der Rahmen (4) des Transportfahrzeuges (2), einer Anhängervorrichtung, eines Kastenwagens, eines Kofferfahrzeuges oder eines Verkaufsfahrzeuges mit mindestens einer Hub- und Senkeinrichtung (12) mittelbar oder unmittelbar in Verbindung steht, wobei nur bei Stillstand des Fahrzeuges und nur in angehobenem, nach unten ausgefahrenen Zustand der Hub- und Senkeinrichtung (12) ein lastenarmes oder lastenfreies Ein- und Ausfahren der Teleskoprohre (11) aus dem zentralen Führungsrohr (5) - ohne oder mit reduzierten Reibungswiderständen zwischen Untergrund (18) und den beiden Rädern (16) - herbeiführbar ist und wobei nach dem seitlichen Ausfahren der Teleskoprohre (11) aus dem zentralen Führungsrohr (5) die Hub- und Senkeinrichtungen (12) wieder vollständig einziehbar sind, so dass der rückseitige, in Fahrtrichtung (6) nach hinten weisende Teil (29) des Rahmens (4) - und/oder die rückseitige Ladekante (28) der Ladefläche (26) - vollständig auf den Untergrund (18) vertikal absenkbar sind, wobei dabei eine Schwenkbewegung des Rahmens (4) um eine - in der Draufsicht - rechtwinklig zur Längsachse (3) des Fahrzeuges (2) ausgerichtete Drehachse (30) erfolgt, welche durch die Vorderachse (31), oder durch die Mitte der Vorderachse (31) oder durch den Radaufstandspunkt der Vorderräder (33) verläuft.

7. Vorrichtung (7) nach einem der Ansprüche 1 bis 6, **dadurch gekennzeichnet, dass** jedes Teleskoprohr (11) jeweils mittels einer Sicherungseinrichtung (13) und/oder eines Verriegelungselementes in der in das zentrale Führungsrohr (5) eingefahrenen Stellung festhaltbar und dort fixierbar ist, wobei diese Sicherungseinrichtungen (13) oder Verriegelungselemente mechanisch, pneumatisch, hydraulisch, elektrisch - oder in Mischformen hiervon - betreibbar sind.

8. Vorrichtung (7) nach einem der Ansprüche 1 bis 7, **dadurch gekennzeichnet, dass** jedes freie Ende der beiden Achsschwingen (15) jeweils unmittelbar - oder mittelbar über eine starr an dem freien Ende der jeweiligen Achsschwinge (15) angebrachte Federelement-Anschluss- Einrichtung (8) - mit einem Federelement (14) in Verbindung steht, wobei diese Verbindung in Form eines einachsig oder zweiachsig schwenkbaren Gelenkes (10) ausgebildet ist.

9. Vorrichtung (7) nach Anspruch 8, **dadurch gekennzeichnet, dass** das freie Ende jedes Federelementes (14) über ein einachsig oder zweiachsig schwenkbares Gelenk (22) mit dem Rahmen (4) - und/oder mit einer den Rahmen (4) entlastenden Lastaufnahmebrücke (21) - in Verbindung steht.

10. Vorrichtung (7) nach einem der Ansprüche 8 oder 9, **dadurch gekennzeichnet, dass** das Gelenk (22) zwischen dem Federelement (14) und dem Rahmen (4) oder der Lastaufnahmebrücke (21) in einem Abstand (23) von dem Führungsrohr (5) der teleskopierbaren Hinterachse (1) angeordnet ist, welcher im wesentlichen der Länge der Achsschwinge (15) entspricht, so dass das Federelement (14) im nicht-teleskopierten Zustand (20) der teleskopierbaren Hinterachse (1) nahezu senkrecht - bezogen auf die Längsachse des Rahmens (4) - ausgerichtet ist .

11. Vorrichtung (7) nach einem der Ansprüche 8 bis 10, **dadurch gekennzeichnet, dass** die Federelemente (14) bei aus dem zentralen Führungsrohr (5) ausgefahrenen Teleskoprohren (11) schräg ausgerichtet sind, während die Federelemente (14) bei in das zentrale Führungsrohr (5) eingefahrenen Teleskoprohren (11) in etwa vertikal ausgerichtet sind.

12. Vorrichtung (7) nach einem der Ansprüche 9 oder 10, **dadurch gekennzeichnet, dass** die Lastaufnahmebrücke (21) unterhalb des Rahmens (4) - oder zwischen den gegenüberliegenden Seiten des Rahmens (4) - verläuft und an jedem freien Ende jeweils einen Vorsprung (25) für die Anbringung eines Gelenkes (22) für das Federelement (14) trägt.

## Claims

1. A device (7) for lowering and raising the rear-side part (29), pointing rearwards, as considered in the direction of travel (6), of the chassis (4) of a transportation vehicle (2), a trailer tow hitch, a panel van, a box vehicle or a sales vehicle, and for adjusting the angle of inclination α formed between the longitudinal axis (3) of the chassis (4) - or its rear-side extension - on the one hand and the ground (18) on the other hand, which device comprises at least one rear axle (1) which can be indirectly or directly telescoped in respect to the track width (19, 20) thereof and one or more raising and lowering devices (12) for directly or indirectly supporting, raising or lowering the rear-side part (29) of the chassis (4), which rear-side part points rearwards as considered in the direction of travel (6), **characterized in that** the telescopable rear axle (l) comprises at least one central guide tube (5), able to be brought indirectly or directly into connection with the chassis (4), wherein respectively a telescopic tube (11) is able to be retracted and extended indirectly or directly with respect to the exterior from the free ends, on both sides, of this central guide tube (5), wherein each outwardly pointing free end of the two retractable and extendable telescopic tubes (11) respectively carries indirectly or directly an axis swinging arm (15), wherein at the free ends of each axis swinging arm (15), aligned in opposition to the direction of travel (6), respectively a wheel (16) is mounted directly or indirectly via an interposed axle stub (9).

2. The device (7) according to Claim 1, **characterized in that** it comprises one or more respectively single-part or multiple-part control devices, which are configured such that, after the complete or partial extending of the raising and lowering devices (12) downwards, they automatically or manually and dependently on or independently of one another variably adjust the distances (19, 20) between the then load-free or low-load wheels (16) of the telescopable rear axle (1), during the standstill of the transportation vehicle (2) or of the trailer tow hitch, by means of one or more telescoping devices (17), wherein the axle stubs (9) on both sides - in non-telescoped state (20) of the telescopable rear axle (1) - are lying lower in vertical terms with respect to the height of an area spanned by the chassis (4), whereas the axle stubs (9) in telescoped state (19) of the telescopable rear axle (1) are lying higher compared hereto, so that - viewed from the side - the angle of inclination α formed between a rear-side extension of the longitudinal axis (3) of the chassis (4) on the one hand and the ground (18) on the other hand - after the complete retracting or shortening of the raising and lowering device (12) for the chassis (4) - lies in the range of 2.0° to 15.0°, wherein the distance (32) between the rear-side end of the chassis (4) or of the loading sill (28) on the one hand and the ground (18) on the other hand is adjustable in a range which lies between 300.0 mm to 0.0 cm.

3. The device (7) according to one of Claims 1 or 2, **characterized in that** the mounting of the respective axis swinging arm (15) on its telescopic tube (11) takes place by means of a pivot device (24), which permits a pivoting movement of the axis swinging arm (15) about the axis of the telescopic tube (11).

4. The device (7) according to one of Claims 1, 2 or 3, **characterized in that** the retractability and extendability of the two outwardly directed telescopic tubes (11) from the central guide tube (5) is able to be brought about by respectively a telescoping device (17), which acts in a shortening and lengthening manner between the central guide tube (5) and the respective telescopic tube (11) in translatory terms parallel to the longitudinal axis of the guide tube (5) .

5. The device (7) according to Claim 4, **characterized in that** the telescoping devices (17) are configured in the form of lifting cylinders which are operated electrically, pneumatically, hydraulically or mechanically - or in mixed forms hereof.

6. The device (7) according to one of Claims 1 to 5, **characterized in that** the chassis (4) of the transportation vehicle (2), of a trailer tow hitch, of a panel van, of a box vehicle or of a sales vehicle is indirectly or directly connected with at least one raising and lowering device (12), wherein only when the vehicle is at a standstill and only in raised, downwardly extended state of the lifting and lowering device (12) is a low-load or load-free retracting and extending of the telescopic tubes (11) from the central guide tube (6) able to be brought about - without or with reduced frictional resistances between ground (18) and the two wheels (16) -, and wherein after the lateral extending of the telescopic tubes (11) from the central guide tube (5) the lifting and lowering devices (12) are able to be drawn in completely again, so that the rear-side part (29) of the chassis (4), pointing toward the rear in the direction of travel (6), - and/or the rear-side loading sill (28) of the loading area (26) - are able to be lowered vertically entirely onto the ground (18), wherein here a pivoting movement of the chassis (4) takes place about a rotation axis (30), aligned - in top view - at right-angles with respect to the longitudinal axis (3) of the vehicle (2), which rotation axis runs through the front axle (31), or through the centre of the front axle (31) or through the wheel contact point of the front wheels (33).

7. The device (7) according to one of Claims 1 to 6, **characterized in that** each telescopic tube (11) is able to be held firm in the retracted position into the central guide tube (5) and able to be fixed there respectively by means of a securing device (13) and/or a locking element, wherein these securing devices (13) or locking elements are able to be operated mechanically, pneumatically, hydraulically, electrically - or in mixed forms hereof.

8. The device (7) according to one of Claims 1 to 7, **characterized in that** each free end of the two axis swinging arms (15) is connected to a spring element (14) respectively directly - or indirectly via a spring element connection device (8) mounted rigidly at the free end of the respective axis swinging arm (15) - , wherein this connection is configured in the form of a joint (10) which is pivotable uniaxially or biaxially.

9. The device (7) according to Claim 8, **characterized in that** the free end of each spring element (14) is connected via a uniaxially or biaxially pivotable joint (22) to the chassis (4) - and/or to a load bearing bridge (21) relieving the chassis (4).

10. The device (7) according to one of Claims 8 or 9, **characterized in that** the joint (22) is arranged between the spring element (14) and the chassis (4) or the load bearing bridge (21) at a distance (23) from the guide tube (5) of the telescopable rear axle (1), which corresponds substantially to the length of the axis swinging arm (15), so that the spring element (14) in the non-telescoped state (20) of the telescopable rear axle (l) is aligned almost perpendicularly - in relation to the longitudinal axis of the chassis (4).

11. The device (7) according to one of Claims 8 to 10, **characterized in that** the spring elements (14) are aligned obliquely when the telescopic tubes (11) are extended from the central guide tube (5), whereas when the telescopic tubes (11) are retracted into the central guide tube (5) the spring elements (14) are aligned approximately vertically.

12. The device (7) according to one of Claims 9 or 10, **characterized in that** the load bearing bridge (21) runs beneath the chassis (4) - or between the opposite sides of the chassis (4) - and carries at each free end respectively a projection (25) for the mounting of a joint (22) for the spring element (14).

## Revendications

1. Dispositif (7) pour abaisser et relever la partie arrière (29) du châssis (4) d'un véhicule de transport (2), d'un dispositif de remorque, d'un fourgon, d'un véhicule fourgon ou d'un véhicule utilitaire dans le sens de la marche (6) et permettant de régler l'angle d'inclinaison α compris entre l'axe longitudinal (3) du châssis - ou son prolongement arrière d'une part - et le sol (18) d'autre part, qui comporte au moins un essieu arrière télescopique (1) et un ou plusieurs dispositifs de levage et d'abaissement (12) pour soutenir, relever ou abaisser directement ou indirectement la partie arrière (29) du châssis (4) qui pointe vers l'arrière dans le sens de la marche (6) par rapport à leur largeur de voie (19, 20), **caractérisé en ce que** l'essieu arrière télescopique (1) comporte au moins un tube de guidage central (5) pouvant être raccordé directement ou indirectement au châssis (4), dans lequel à partir des extrémités libres des deux côtés de ce tube central de guidage (5), un tube télescopique (11) peut être rétracté et déployé, dirigé partiellement ou directement vers l'extérieur, chaque extrémité libre tournée vers l'extérieur des deux tubes télescopiques (11) pouvant être rétractés et déployés porte un culbuteur d'essieu (15) directement ou indirectement, dans lequel sur l'extrémité libre opposée au sens de la marche (6) de chaque culbuteur d'essieu (15), une roue respective (16) est montée directement ou indirectement via une fusée d'essieu intermédiaire (9).

2. Dispositif (7) selon la revendication 1, **caractérisé en ce qu'**il comprend un ou plusieurs dispositifs de commande, chacun monobloc ou en plusieurs parties, qui sont conçus de telle sorte qu'ils soient automatiques ou manuels et dépendants ou indépendants les uns des autres, après le déploiement total ou partiel du dispositif de levage et d'abaissement (12) vers le bas, les distances (19, 20) entre les roues (16) de l'essieu arrière télescopique qui sont alors déchargées ou légèrement chargées pendant l'arrêt du véhicule de transport (2) ou dispositif de remorque sont réglées de manière variable au moyen d'un ou plusieurs dispositifs télescopiques (17), dans lequel les fusées d'essieu (9) des deux côtés faisant face à l'essieu arrière télescopique (1) à l'état non télescopique (20) sont inférieures en hauteur à la hauteur d'une surface enjambée par le châssis (4), tandis que les fusées d'essieu (9) à l'état télescopique de l'essieu arrière télescopique (1) sont plus élevés en comparaison, de sorte que - vu de côté - l'angle d'inclinaison α compris entre une extension arrière de l'axe longitudinal (3) du châssis (4) d'une part et le sol (18) d'autre part - après rétraction ou raccourcissement complet du dispositif de levage et d'abaissement (12) pour le châssis (4) - est compris entre 2,0° et 15,0°, dans lequel la distance (32) entre l'extrémité arrière du châssis (4) ou du seuil de chargement (28) d'une part et le sol (18) d'autre part est réglable dans une plage comprise entre 300,0 mm et 0,0 cm.

3. Dispositif (7) selon une quelconque des revendications 1 ou 2, **caractérisé en ce que** le culbuteur d'essieu respectif (15) est fixé à son tube télescopique (11) au moyen d'un dispositif de pivotement (24), qui permet un mouvement de pivotement du culbuteur d'essieu (15) autour de l'axe du tube télescopique (11) .

4. Dispositif (7) selon une des revendications 1, 2 ou 3, **caractérisé en ce que** les deux tubes télescopiques (11) dirigés vers l'extérieur peuvent être rétractés et déployés du tube central de guidage (5) par un dispositif télescopique respectif (17), qui agit entre le tube de guidage central (5) et le tube télescopique respectif (11) en translation parallèlement à l'axe longitudinal du tube de guidage (5) en raccourcissement et en allongement.

5. Dispositif (7) selon la revendication 4, **caractérisé en ce que** les dispositifs télescopiques (17) sont réalisés sous la forme de vérins de levage électriques pneumatiques, hydrauliques ou mécaniques ou de vérins de levage actionnés par des formes mixtes de ceux-ci.

6. Dispositif (7) selon une des revendications 1 à 5, **caractérisé en ce que** le châssis (4) du véhicule de transport (2), d'un dispositif de remorque, d'un fourgon, d'un véhicule fourgon ou d'un véhicule utilitaire est raccordé directement ou indirectement à au moins un dispositif de levage et d'abaissement (12), dans lequel uniquement à l'arrêt du véhicule et uniquement lorsque le dispositif de levage et d'abaissement (12) est relevé et étendu vers le bas, les tubes télescopiques (11) sont rétractés ou déployés à faible charge ou à vide hors du tube de guidage central (6) sans ou avec une résistance de frottement réduite entre le sol (18) et les deux roues (16) et dans lequel après l'extension latérale des tubes télescopiques (11) hors du tube de guidage central (5), les dispositifs de levage et d'abaissement (12) peuvent être à nouveau complètement rétractés de sorte que la partie arrière (29) pointant vers l'arriére (29) dans la direction de marche (6) du châssis (4) et/ou le seuil de chargement arrière (28) de la zone de chargement (26) peut être complètement abaissé verticalement sur le sol (18), dans lequel ainsi un mouvement de pivotement du châssis (4) autour de l'axe de rotation (30) du véhicule (2) aligné perpendiculairement à l'axe longitudinal (3) -en vue de dessus- a lieu, qui passe par l'essieu avant (31) ou par le centre de l'essieu avant (31) ou par le point de contact des roues des roues avant (33).

7. Dispositif (7) selon une quelconque des revendications 1 à 6, **caractérisé en ce que** chaque tube télescopique (11) peut être immobilisé et fixé au moyen chacun d'un dispositif de fixation respectif (13) et/ou d'un élément de blocage en position rétractée dans le tube de guidage central (5), dans lequel ces dispositifs de fixation (13) ou éléments de verrouillage sont actionnables de manière mécanique, pneumatique, hydraulique, électrique - ou leurs formes mixtes.

8. Dispositif (7) selon une des revendications 1 à 7, **caractérisé en ce que** chaque extrémité libre des deux culbuteurs d'essieu (15) est raccordée directement ou indirectement par l'intermédiaire d'un dispositif de raccordement à ressort (8) de manière rigide à l'extrémité libre du culbuteur d'essieu respectif (15) à un élément à ressort (14), dans lequel ce raccord se présente sous la forme d'une articulation pivotant uniaxialement ou biaxialement (10).

9. Dispositif (7) selon la revendication 8, **caractérisé en ce que** l'extrémité libre de chaque élément de ressort (14) est raccordée par l'intermédiaire d'une articulation pivotante uniaxiale ou biaxiale (22) avec le châssis (4) et/ou avec un pont porteur (21) soulageant le châssis (4).

10. Dispositif (7) selon une quelconque des revendications 8 ou 9, **caractérisé en ce que** l'articulation (22) entre l'élément de ressort (14) et le châssis (4) ou le pont porteur (21) est disposée à une distance (23) à partir du tube de guidage (5) de l'essieu arrière télescopique (1), qui correspond essentiellement à la longueur du culbuteur d'essieu (15), de sorte que l'élément de ressort (14) à l'état non télescopique (20) de l'essieu arrière télescopique (1) soit aligné presque verticalement - par rapport à l'axe longitudinal du châssis (4).

11. Dispositif (7) selon une des revendications 8 à 10, **caractérisé en ce que** les éléments de ressorts (14) sont alignés obliquement lorsque les tubes télescopiques (11) sont sortis du tube de guidage central (5), tandis que les éléments de ressorts (14) sont alignés approximativement verticalement lorsque les tubes télescopiques (11) sont insérés dans le tube de guidage central (5).

12. Dispositif (7) selon une des revendications 9 ou 10, **caractérisé en ce que** le pont porteur (21) s'étend sous le châssis (4) ou entre les côtés opposés du châssis (4) et à chaque extrémité libre une protubérance respective (25) pour la fixation d'une articulation (22) supporte l'élément ressort (14).
